# EUROPÄISCHE PATENTANMELDUNG

(11) **EP 4 597 804 A1**
(43) Veröffentlichungstag der Anmeldung: **06.08.2025**
(21) Anmeldenummer: 24155691.9
(22) Anmeldetag: 05.02.2024
(51) Int. Cl.: H02K 7/18, H02K 11/25

(54) **VERFAHREN ZUR TEMPERATURÜBERWACHUNG EINES GENERATORS EINER WINDENERGIEANLAGE**

(71) Anmelder: Wobben Properties GmbH, 26607 Aurich (DE)
(72) Erfinder: Daboul, Hussam, 26624 Südbrookmerland (DE); Ewen, Rolf, 26603 Aurich (DE); Müller, Michael, 26624 Südbrookmerland (DE)
(74) Vertreter: Eisenführ Speiser

(57) **Zusammenfassung**

Es wird ein Verfahren zur Temperaturüberwachung eines elektrischen Generators (200) einer Windenergieanlage (100) vorgesehen, wobei der Generator (200) einen Stator (220), einen Rotor (210) und eine Temperaturüberwachungseinheit (300) aufweist. Die Temperaturüberwachungseinheit weist ein passives Steuerelement (310) an dem Rotor (210) und eine Empfangseinheit (320) an dem Stator (220) auf. Eine Temperaturänderung am Rotor (210) führt zu einer mechanischen oder optischen Änderung des passiven Steuerelementes (310). Die mechanische oder optische Änderung des passiven Steuerelementes (310) wird durch die Empfangseinheit (320) an dem Stator (220) erfasst.

## Beschreibung

Die vorliegende Erfindung betrifft ein Verfahren zur Temperaturüberwachung eines elektrischen Generators einer Windenergieanlage und einen elektrischen Generator.

Eine Windenergieanlage weist einen elektrischen Generator auf, welcher zur Erzeugung elektrischer Energie aus der kinetischen Energie des Windes verwendet wird. Der elektrische Generator weist einen Rotor und einen Stator auf. Beim Betrieb des elektrischen Generators können in dem Rotor und/oder dem Stator elektrische Verluste in Wärme umgewandelt werden. Dies kann zu einer unzulässigen Erwärmung des Stators und/oder des Rotors des Generators führen. Daher kann eine Temperaturüberwachung des Generators sinnvoll sein.

Es ist daher Aufgabe der vorliegenden Erfindung, ein Verfahren zur Temperaturüberwachung eines Generators in einer Windenergieanlage und einen elektrischen Generator vorzusehen.

Diese Aufgabe wird durch ein Verfahren zur Temperaturüberwachung eines elektrischen Generators einer Windenergieanlage nach Anspruch 1 und durch einen elektrischen Generator nach Anspruch 9 gelöst.

Somit wird ein Verfahren zur Temperaturüberwachung eines Generators einer Windenergieanlage vorgesehen. Der elektrische Generator weist einen Rotor und einen Stator auf. Zwischen dem Rotor und dem Stator ist ein Generatorspalt vorgesehen. Ferner ist eine Temperaturüberwachungseinheit vorgesehen, welche dazu dient, eine Temperatur im Bereich des Generators (im Bereich des Rotors oder des Stators) zu überwachen. Die Temperaturüberwachungseinheit weist ein passives Steuerelement auf, welches eine Temperatur im Bereich des Rotors erfasst. Insbesondere bewirkt eine Temperaturänderung an dem Rotor eine mechanische oder optische Änderung des Steuerelementes. Ferner weist die Temperaturüberwachungseinheit eine Empfangseinheit auf, welche in oder an dem Stator vorgesehen ist und eine Änderung der durch das passive Steuerelement erfassten Temperatur detektiert. Hiermit ist es möglich, ein Signal ohne einen Schleifring zwischen dem Rotor und dem Stator zu übertragen. Dies ist vorteilhaft, da ein Schleifring fehleranfällig ist und nach einer Zeit ausgetauscht werden muss.

Gemäß einem Beispiel weist das passive Steuerelement einen beweglichen Stift auf, dessen freie Länge sich in Abhängigkeit von der Temperatur des Rotors an der Stelle, an der das Steuerelement angeordnet ist, ändert.

Gemäß einem Beispiel kommt der bewegliche Stift in Kontakt mit einer Kontaktfläche der Empfangseinheit, wenn die Temperatur des Rotors einen Schwellwert überschreitet und eine Längenänderung des beweglichen Stiftes bewirkt.

Gemäß einem Beispiel weist der bewegliche Stift ein Magnetelement auf und die Empfangseinheit weist einen Magnetsensor auf, welcher eine Annäherung des Magnetelementes des Steuerelementes erfasst.

Gemäß einem Beispiel weist die Empfangseinheit einen Hindernis-Erkennungssensor auf, welcher dazu geeignet ist, den beweglichen Stift mittels elektromagnetischer Wellen zu erfassen.

Gemäß einem Beispiel ist der Hindernis-Erkennungssensor als ein Infrarot- oder als ein Ultraschallsensor ausgestaltet.

Gemäß einem Beispiel weist das passive Steuerelement einen Temperaturmessstreifen auf, welcher sich in Abhängigkeit von der erfassten Temperatur verfärbt. Die Empfangseinheit weist einen optischen Sensor, insbesondere eine Kamera, auf, um die Verfärbung des Temperaturmessstreifens (d.h. die optische Änderung des Steuerelementes) zu erfassen.

Gemäß einem Beispiel ist ein Verfahren zur Temperaturüberwachung eines Generators einer Windenergieanlage vorgesehen, wobei der Generator einen Stator und einen Rotor aufweist. Eine Temperatur zumindest eines Abschnitts des Rotors wird mittels eines Temperatursensors erfasst, welcher an dem Stator befestigt ist.

Die Temperaturüberwachungseinheit kann optional eine Steuereinheit aufweisen, welche dazu ausgestaltet ist, anhand des durch die Empfangseinheit erfassten Zustands des passiven Steuerelementes auf eine Überschreitung eines Temperaturschwellwertes zu schließen und ein Warnsignal auszugeben oder in die Steuerung der Windenergieanlage einzugreifen (beispielsweise, um eine Kühlung zu aktivieren, die Drehzahl zu reduzieren oder die Windenergieanlage auszuschalten oder herunterzufahren).

Die passive Steuereinheit kann ein Bimetallelement oder ein Thermostat aufweisen. Das passive Steuerelement reagiert auf die Umgebungstemperatur oder auf die Temperatur des Rotors und eine Veränderung der Temperatur führt zu einer (mechanischen) Änderung des passiven Steuerelementes. Dies kann beispielsweise eine Längenänderung oder eine Formänderung darstellen. Alternativ dazu kann die Änderung eine grafische oder optische Änderung (z.B. ein Temperaturmessstreifen) darstellen.

Eine Übertragung der Zustände des passiven Steuerelementes (welche auf die Temperatur hinweisen) kann mechanisch erfolgen, wobei eine Längenänderung oder Formänderung des Steuerelementes einen Kontakt auf der Statorseite betätigt. Dies kann durch die Empfangseinheit detektiert und an die Steuereinheit weitergeleitet werden. Dort kann anhand des erfolgten mechanischen Kontaktes darauf rückgeschlossen werden, dass die Temperatur im Bereich des Rotors, an welchem die Steuereinheit vorgesehen ist, einen Schwellwert überschritten hat.

Alternativ dazu kann die Übertragung des Zustandes des passiven Steuerelementes magnetisch erfolgen. Hierzu kann beispielsweise ein Reedsensor oder ein magnetfeldbasierter Sensor auf oder an dem Stator vorgesehen sein. Hierbei kann das Steuerelement einen Magneten an einem beweglichen Abschnitt aufweisen. Eine Temperatursteigung führt beispielsweise zur Längenänderung eines Stiftes des Steuerelementes, so dass der Magnet sich in Richtung des Stators und insbesondere eines Magnetsensors (Reedsensor) bewegt. Somit kann eine Annäherung erfasst werden. Eine erfasste Annäherung erlaubt einen Rückschluss auf eine Überschreitung eines Temperaturschwellwertes in dem Rotor.

Gemäß einem Beispiel kann die Empfangseinheit einen drahtlosen Hindernis-Erkennungssensor aufweisen, welcher erkennt, wenn die passive Steuereinheit als Reaktion auf eine Temperaturänderung in dem Rotor einer Windenergieanlage eine Längenänderung oder eine Formänderung vollzieht.

Gemäß einem Beispiel kann die passive Steuereinheit mindestens einen reversiblen Temperaturmessstreifen aufweisen, welcher sich in Abhängigkeit von der Temperatur verfärbt. Die Empfangseinheit kann dann einen Fotodetektor oder eine Kamera am Stator aufweisen, um die Temperatur auf dem reversiblen Temperaturmessstreifen zu erfassen.

Gemäß einem Beispiel kann die Empfangseinheit als Infrarot-Temperatursensor ausgestaltet sein, welche auf der Statorseite montiert ist und per Infrarot eine Temperatur an einer Stelle des Rotors erfasst.

Die durch die Empfangseinheit der Temperaturüberwachungseinheit erfassten Temperaturen oder die erfassten Überschreitungen eines Temperaturschwellwertes können an eine Steuerung der Windenergieanlage weitergeleitet werden, um gegebenenfalls entsprechende Schritte einzuleiten.

Gemäß einem Beispiel wird ein elektrischer Generator für eine Windenergieanlage vorgesehen, der einen Rotor, einen Stator, einen Generatorspalt zwischen Rotor und Stator und eine Temperaturüberwachungseinheit aufweist, welche ein passives Steuerelement an dem Rotor und eine Empfangseinheit an dem Stator aufweist. Das passive Steuerelement ist dazu ausgestaltet, bei einer Temperaturänderung des Rotors eine mechanische oder optische Änderung durchzuführen oder zu erzeugen. Die Empfangseinheit ist dazu ausgestaltet, eine mechanische oder optische Änderung des passiven Steuerelementes zu erfassen.

Der elektrische Generator kann einen permanent erregten Synchrongenerator darstellen, bei welchem der Rotor Permanentmagnete zur Erregung (d.h. zur Erzeugung eines Rotor-Magnetfeldes) aufweist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Schnittansicht eines Generators einer Windener-gieanlage,
- Fig. 3A bis 3C: zeigen jeweils eine schematische Schnittansicht eines Generators einer Windenergieanlage,
- Fig. 4: zeigt eine schematische Darstellung eines passiven Steuerelementes mit einem Bimetallelement, und
- Fig. 5: zeigt eine schematische Darstellung eines passiven Steuerelementes.

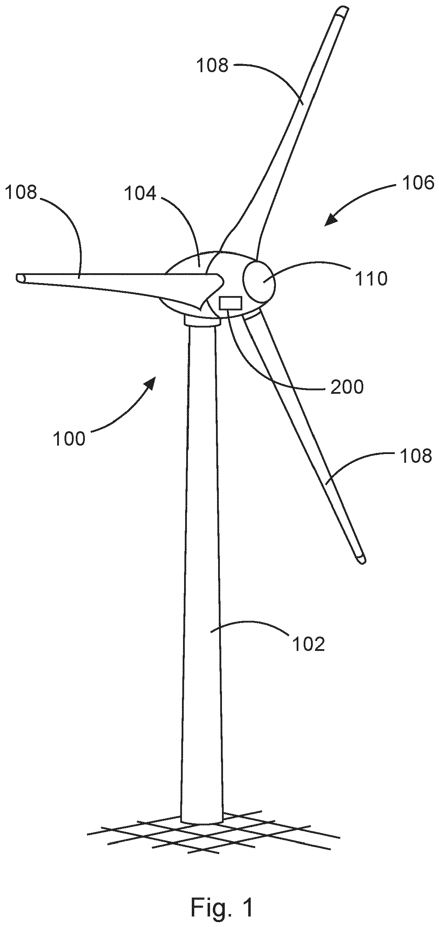

Fig. 1 zeigt eine schematische Darstellung einer Windenergieanlage. Die Windenergieanlage 100 weist einen Turm 102 mit einer Gondel 104 und einem aerodynamischen Rotor 106 auf. Der aerodynamische Rotor 106 weist drei Rotorblätter 108 sowie einen Spinner 110 auf. Im Inneren der Gondel 104 befindet sich ein elektrischer Generator 200. Ein Rotor des elektrischen Generators 200 ist mit dem aerodynamischen Rotor 106 direkt oder mittels eines Getriebes gekoppelt. Bei Rotation des aerodynamischen Rotors 106 wird somit der Rotor des Generators 200 in Rotation versetzt. Hierdurch kann der Generator 200 elektrische Energie erzeugen.

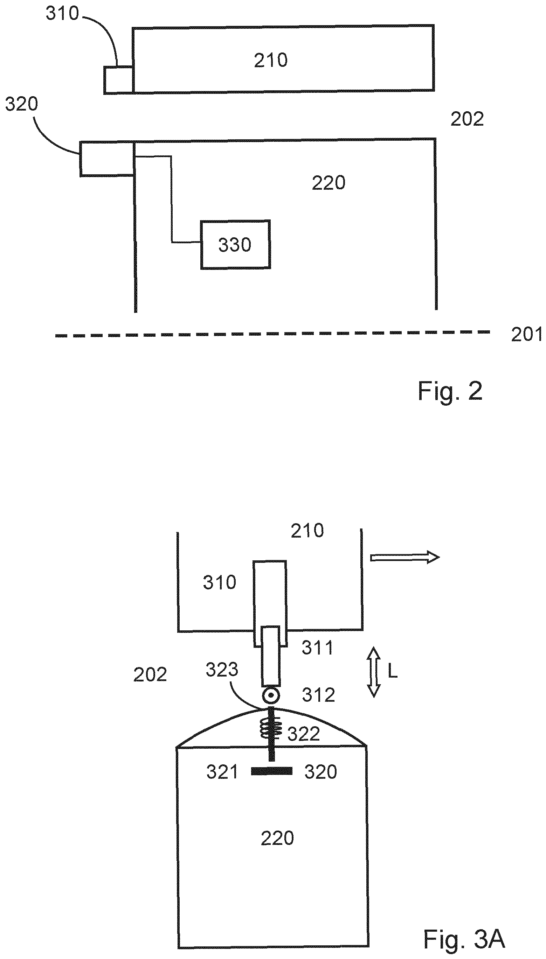

Fig. 2 zeigt eine schematische Schnittansicht eines Generators einer Windenergieanlage. Der Generator 200 weist einen Rotor 210 und einen Stator 220 auf. Zwischen Rotor 210 und Stator 220 ist ein Generatorspalt 202 vorgesehen. Der Rotor 210 dreht um die Drehachse 201.

Zur Temperaturüberwachung des Generators ist eine Temperaturüberwachungseinheit 300 vorgesehen. Die Temperaturüberwachungseinheit 300 weist ein passives Steuerelement 310 und eine Empfangseinheit 320 auf. Das passive Steuerelement 310 ist mit dem Rotor 210 gekoppelt. Die Empfangseinheit 320 ist an den Stator 220 gekoppelt.

Die Temperaturüberwachungseinheit 300 kann ferner eine Steuereinheit 330 aufweisen, welche mit der Empfangseinheit 320 gekoppelt ist. Das passive Steuerelement 310 ist dazu in der Lage, eine Temperatur an mindestens einer Stelle des Rotors 210 zu erfassen. Eine Temperaturänderung des Rotors 210 führt zu einer Änderung des Steuerelementes 310.

Die Änderung des Steuerelementes 310 kann eine mechanische Ausdehnung (bei steigender Temperatur) oder ein mechanisches Zusammenziehen (bei sinkender Temperatur) bewirken. Die Empfangseinheit 320 kann die Änderung des Steuerelementes 310 erfassen. Falls die Änderung einen Schwellwert überschreitet, dann kann die Steuereinheit 330 ein Warnsignal ausgeben und/oder in eine Steuerung der Windenergieanlage eingreifen.

Die Erfassung der Änderung des passiven Steuerelementes 310 durch die Empfangseinheit 320 kann mechanisch, elektrisch, magnetisch, optisch und/oder elektromagnetisch erfolgen.

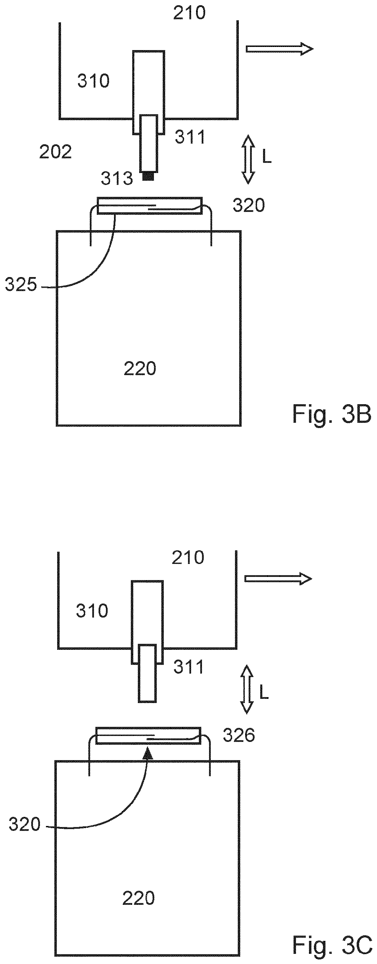

Fig. 3A bis 3C zeigen jeweils eine schematische Schnittansicht eines Generators einer Windenergieanlage. In Fig. 3A ist eine mechanische Erfassung, in Fig. 3B ist eine magnetische Erfassung und in Fig. 3C ist eine elektromagnetische Erfassung dargestellt.

In Fig. 3A ist an einem Rotor 210 des Generators 200 ein Steuerelement 310 vorgesehen, welches einen beweglichen Stift 311 aufweist. Das passive Steuerelement 310 verändert bei einer Temperaturänderung seine mechanische Form z. B. mittels einer Längenänderung L eines beweglichen Stiftes 311. Mit anderen Worten, bei Erwärmung des Rotors 210 wird dies von dem passiven Steuerelement 310 erfasst und in eine Änderung der Länge L des Steuerelementes 310 beispielsweise in Form eines beweglichen Stiftes 311 umgewandelt.

Der Stator 220 des Generators 200 weist eine Empfangseinheit 320 auf. Die Empfangseinheit 320 kann einen mechanischen Kontaktdetektor 321 aufweisen. Der Kontaktdetektor 321 kann ein vorgespanntes Element 322 und eine Kontaktfläche 323 aufweisen.

Eine Temperaturerhöhung des Rotors 210 führt zu einer Längenänderung des Steuerelementes 310 insbesondere durch Herausfahren des beweglichen Stiftes 311. Wenn die Temperaturänderung einen Schwellwert überschritten hat, dann führt dies zu einer Längenänderung, so dass der bewegliche Stift 311 in mechanischen Kontakt mit einer Kontaktfläche 323 des Kontaktdetektors 321 an dem Stator 220 kommt.

Das Steuerelement 310 kann optional ein Rad 312 am freien Ende des beweglichen Stiftes 311 aufweisen. Dies ist vorteilhaft, weil damit eine mechanische Reibung zwischen dem ausgefahrenen beweglichen Stift 311 und der Kontaktfläche 323 des Kontaktdetektors 321 reduziert. Die Kontaktfläche 323 kann mittels des vorgespannten Elementes 322 vorgespannt sein.

Der ausgefahrene bewegliche Stift 311 und das Rad 312 kommen dann in Kontakt mit der Kontaktfläche 323, sofern die Temperatur des Rotors einen entsprechenden Schwellwert überschritten hat. Dieser Kontakt drückt die Kontaktfläche 323 nach innen, was von dem Kontaktdetektor 321 erfasst wird.

In Fig. 3B weist der elektrische Generator 200 einen Rotor 210 und einen Stator 220 auf. Ferner ist eine Temperaturüberwachungseinheit 300 vorgesehen. Die Temperaturüberwachungseinheit 300 weist ein passives Steuerelement 310 auf, welches an dem Rotor 210 vorgesehen ist und eine Empfangseinheit 320, welche an dem Stator 220 vorgesehen ist.

Das passive Steuerelement 310 weist einen beweglichen Stift 311 sowie einen Magnet 313 am freien Ende des beweglichen Stiftes auf. Eine Temperaturerhöhung des Rotors 210 bewirkt eine Längenänderung L des Steuerelementes 310, insbesondere eine Änderung der freien Länge L des beweglichen Stiftes 311.

Die Empfangseinheit 320 an dem Stator 220 kann als Magnetsensor 325 beispielsweise in Form eines Reedsensors ausgestaltet sein. Wenn der Magnet 313 ausreichend nah an dem Magnetsensor 325 herangeführt wird, dann wird die Annäherung detektiert und diese Informationen werden an die Steuereinheit 330 weitergeleitet.

In Fig. 3C ist die Empfangseinheit 320 als Hindernis-Erkennungssensor 326 (z. B. als Infrarot- oder als Ultraschallsensor) ausgestaltet.

Die Länge des beweglichen Stiftes 311 korreliert mit einer Temperatur des Rotors 210. Durch Erfassung der Länge des beweglichen Stiftes 311 können somit Rückschlüsse auf die Temperatur des Rotors 310 geschlossen werden, um eine Überhitzung zu vermeiden.

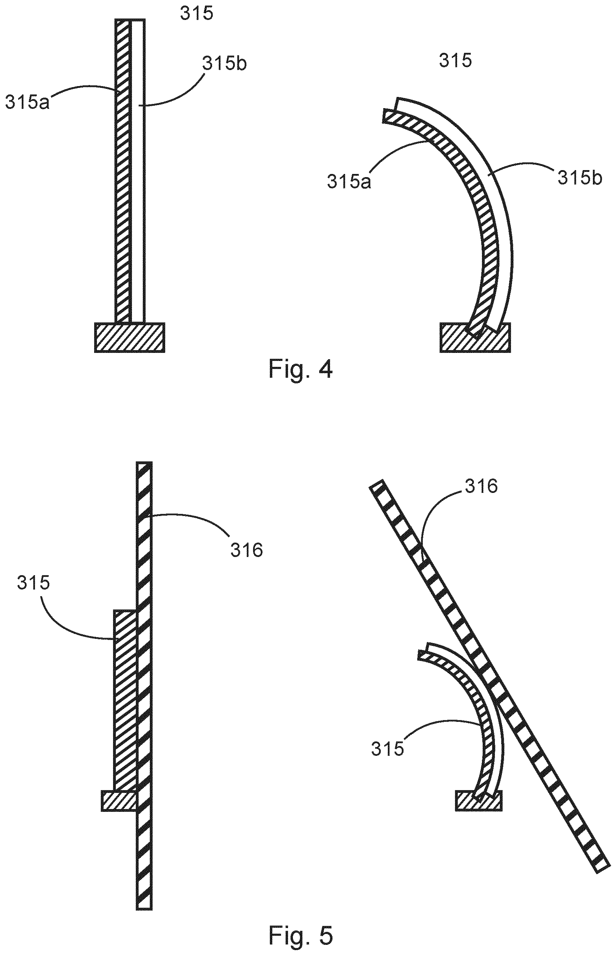

Fig. 4 zeigt eine schematische Darstellung eines passiven Steuerelementes mit einem Bimaterialelement. Fig. 4 zeigt ein Bimaterialelement. Das Bimaterialelement 315 weist zwei Abschnitte 315a, 315b mit unterschiedlichen Wärmeausdehnungskoeffizienten auf. Dies führt dazu, dass bei einer Erwärmung sich die beiden Abschnitte 315a, 315b unterschiedlich ausdehnen, was wie in Fig. 5 gezeigt zu einer Formänderung des Bimaterialelementes führt. Das Bimaterialelement ist typischerweise als ein Bimetallelement ausgestaltet.

Fig. 5 zeigt eine schematische Darstellung eines passiven Steuerelementes. In Fig. 6 ist an einem Bimaterialelement 315 ein Steg 316 gekoppelt. Bei einer Temperaturänderung führt dies dann zu einer Winkeländerung des Stegs 316.

Gemäß einem Beispiel kann eine Temperaturüberwachung des Rotors mittels der Temperaturüberwachungseinheit 300 erfolgen. Hierbei können die Temperaturinformationen mechanisch von einem Steuerelement zu dem Empfangselement übertragen werden. Das Steuerelement setzt eine Temperaturänderung in eine Form- oder Winkeländerung um. Dies kann beispielsweise in Form eines Bimetallelementes oder in Form eines Thermostaten erfolgen. Der Thermostat kann ein Fluid aufweisen, welches sich bei einer Temperaturerhöhung ausdehnt. Die Ausdehnung des Fluids kann dann eine Längenänderung eines Stiftes bewirken. Die Längenänderung des Stiftes kann beispielsweise durch ein Herausschieben eines Stiftes erfolgen.

Ein Beispiel einer mechanischen Übertragung ist in Fig. 3A dargestellt. Alternativ zur mechanischen Übertragung kann eine magnetische Übertragung erfolgen. Dies ist in Fig. 3B dargestellt. Durch den Magnetsensor 325 kann ein Kontakt oder eine Näherung des beweglichen Stiftes, an dessen freien Ende ein Magnet vorgesehen ist, erfasst werden.

Gemäß einem Beispiel (Fig. 3C) kann ein Hindernis-Erkennungssensor als Empfangseinheit vorgesehen sein. Der Hindernis-Erkennungssensor kann beispielsweise als Infrarot- oder Ultraschallsensor ausgestaltet sein. Bei Annäherung des beweglichen Stiftes des Steuerelementes kann der Hindernis-Erkennungssensor eine Annäherung erkennen und ein Warnsignal ausgeben.

Gemäß einem weiteren Aspekt kann ein reversibler Temperaturmessstreifen an dem Rotor vorgesehen sein. An dem Stator kann eine entsprechende Kamera vorgesehen sein, welche den Temperaturwert erfassen kann und einen entsprechenden Warnhinweis ausgeben kann.

Gemäß einem alternativen Beispiel ist ein Infrarot-Temperatursensor an dem Stator vorgesehen. Dieser Infrarot-Temperatursensor kann auf den Rotor ausgerichtet sein und kann die Temperatur des Rotors erfassen. Wenn die Temperatur des Rotors einen Schwellwert überschreitet, dann kann der Infrarot-Temperatursensor ein Warnsignal ausgeben.

### Bezugszeichenliste

- 100: Windenergieanlage
- 102: Turm
- 104: Gondel
- 106: aerodynamischer Rotor
- 110: Spinner
- 200: elektrischer Generator
- 201: Drehachse
- 202: Generatorspalt
- 210: Rotor
- 220: Stator
- 300: Temperaturüberwachungseinheit
- 310: passives Steuerelement
- 311: beweglicher Stift
- 312: Rad
- 313: Magnet
- 315: Bimaterialelement
- 315a, 315b: Abschnitte
- 316: Steg
- 320: Empfangseinheit
- 321: Kontaktdetektor
- 322: vorgespanntes Element
- 323: Kontaktfläche
- 325: Magnetsensor
- 326: Hindernis-Erkennungssensor
- 330: Steuereinheit
- L: Länge

## Patentansprüche

1. Verfahren zur Temperaturüberwachung eines elektrischen Generators (200) einer Windenergieanlage (100), wobei der Generator (200) einen Stator (220), einen Rotor (210) und eine Temperaturüberwachungseinheit (300) aufweist, wobei die Temperaturüberwachungseinheit ein passives Steuerelement (310) an dem Rotor (210) und eine Empfangseinheit (320) an dem Stator (220) aufweist,
wobei eine Temperaturänderung am Rotor (210) zu einer mechanischen oder optischen Änderung des passiven Steuerelementes (310) führt, mit den Schritten:
- Erfassen der mechanischen oder optischen Änderung des passiven Steuerelementes (310) durch die Empfangseinheit (320) an dem Stator (220).

2. Verfahren nach Anspruch 1, wobei das passive Steuerelement (310) einen beweglichen Stift (311) aufweist, dessen freie Länge (L) sich in Abhängigkeit von der Temperatur des Rotors (210) ändert.

3. Verfahren nach Anspruch 2, wobei der bewegliche Stift (311) in Kontakt kommt, mit einer Kontaktfläche zu der Empfangseinheit (320), wenn die Temperatur des Rotors (210) einen Schwellwert überschreitet und eine Längenänderung (L) des beweglichen Stiftes bewirkt.

4. Verfahren nach Anspruch 2, wobei der bewegliche Stift (311) ein Magnetelement aufweist und die Empfangseinheit (320) einen Magnetsensor (325) aufweist, welcher eine Annäherung des Magnetelementes (313) des Steuerelementes (310) erfasst.

5. Verfahren nach Anspruch 2, wobei die Empfangseinheit (320) einen Hindernis-Erkennungssensor (326) aufweist, welcher dazu geeignet ist, den beweglichen Stift (311) mittels elektromagnetischer Wellen zu erfassen.

6. Verfahren nach Anspruch 5, wobei der Hindernis-Erkennungssensor (326) als ein Infrarot- oder als ein Ultraschallsensor ausgestaltet ist.

7. Verfahren nach Anspruch 1, wobei
das passive Steuerelement (310) einen Temperaturmessstreifen aufweist, welcher sich in Abhängigkeit von der erfassten Temperatur verfärbt,
wobei die Empfangseinheit (320) einen optischen Sensor, insbesondere eine Kamera, aufweist, um die Verfärbung des Temperaturmessstreifens zu erfassen.

8. Verfahren zur Temperaturüberwachung eines Generators (200) einer Windenergieanlage (100), wobei der Generator (200) einen Stator (220) und einen Rotor (210) aufweist, mit den Schritten
- Erfassen einer Temperatur zumindest eines Abschnitts des Rotors (210) mittels eines Temperatursensors, welcher an dem Stator (220) befestigt ist.

9. Elektrischer Generator (200) für eine Windenergieanlage (100), mit
- einem Rotor (210) und
- einem Stator (220),
- einem Generatorspalt (202) zwischen Rotor (210) und Stator (220),
und
- einer Temperaturüberwachungseinheit (300), welche ein passives Steuerelement (310) an dem Rotor (210) und eine Empfangseinheit (320) an dem Stator (220) aufweist,
wobei das passive Steuerelement (310) dazu ausgestaltet ist, bei einer Temperaturänderung des Rotors (210) eine mechanische oder optische Änderung durchzuführen,
wobei die Empfangseinheit (320) dazu ausgestaltet ist, eine mechanische oder optische Änderung des passiven Steuerelementes (310) zu erfassen.

10. Elektrischer Generator (200) nach Anspruch 9, wobei
das passive Steuerelement (310) einen beweglichen Stift (311) aufweist, welcher eine Längenänderung in Abhängigkeit von der Temperatur des Rotors (210) bewirkt,
wobei die Empfangseinheit (320) einen mechanischen Kontaktdetektor (321) aufweist,
wobei die Empfangseinheit (320) dazu ausgestaltet ist, einen mechanischen Kontakt zwischen dem beweglichen Stift (311) und dem Kontaktsensor (321) zu erfassen.

11. Elektrischer Generator (200) nach Anspruch 9, wobei
das passive Steuerelement (310) einen beweglichen Stift (311) mit einem Magnetelement (313) aufweist, welcher eine Längenänderung in Abhängigkeit von der Temperatur des Rotors (210) bewirkt,
wobei die Empfangseinheit (320) einen Magnetsensor (321) aufweist, wobei die Empfangseinheit (320) dazu ausgestaltet ist, eine Annährung des Magnetelementes (321) magnetisch zu erfassen.

12. Elektrischer Generator (200) nach Anspruch 9, wobei
das passive Steuerelement (310) einen beweglichen Stift (311) aufweist, welcher eine Längenänderung in Abhängigkeit von der Temperatur des Rotors (210) bewirkt,
wobei die Empfangseinheit (320) einen Hindernis-Erkennungssensor (326) aufweist,
wobei der Hindernis-Erkennungssensor (326) dazu ausgestaltet ist, eine Annäherung des beweglichen Stiftes (311) zu erfassen.

13. Elektrischer Generator (200) nach einem der Ansprüche 9 bis 12, wobei der Generator einen permanent erregten Synchrongenerator darstellt.
